# DEMANDE DE BREVET EUROPEEN

(11) **EP 1 843 489 A1**
(43) Date de publication de la demande: **10.10.2007**
(21) Numéro de dépôt: 06300328.9
(22) Date de dépôt: 05.04.2006
(51) Int. Cl.: H04B 7/185, H04L 1/16

(54) **Dispositif de traitement de données à transmettre sur une voie retour d'un réseau de communication et ne necessitant pas d'acquittement systématique sur une voie aller**

(71) Demandeur: Alcatel Lucent, 75008 Paris (FR)
(72) Inventeur: Martin, Béatrice, PARIS, 75005 (FR)
(74) Mandataire: Hedarchet, Stéphane

(57) **Abrégé**

Un dispositif de traitement (D) est destiné à être implanté dans un terminal de communication radio (UE) propre à être connecté à un réseau de communication radio disposant d'une voie dite aller permettant de diffuser des données du réseau vers des terminaux (UE), et d'une voie dite retour dédiée à la transmission de données des terminaux (UE) vers le réseau. Le dispositif (D) comprend des moyens de traitement (MT) chargés d'extraire de messages de contrôle, diffusés par le réseau sur la voie aller, des paramètres d'accès à la voie retour, et de générer des messages de données destinés à être transmis au réseau sur la voie retour en fonction des paramètres d'accès et ne nécessitant pas d'acquittement systématique sur la voie aller.

## Description

L'invention concerne les réseaux de communication radio qui disposent d'une première bande de fréquences ou de premières tranches temporelles pour diffuser des données par voie d'ondes sur une voie dite aller vers des terminaux de communication radio et d'une seconde bande de fréquences ou de secondes tranches temporelles pour permettre à ces terminaux de communication radio de transmettre des données sur une voie dite retour.

On entend ici par « réseau de communication radio » tout type de réseau disposant d'un réseau d'accès radio capable de diffuser des données. Il pourra notamment s'agir d'un réseau satellitaire, comme par exemple un réseau SDMB (pour « Satellite Digital Multimedia Broadcast »), ou d'un réseau radio terrestre, comme par exemple un réseau UMTS apte à la diffusion (par exemple de type MBMS (pour « Multimedia Broadcast / Multicast Services ») ou DVB-H (pour « Digital Video Broadcasting - Handhelds » - télévision mobile)), ou encore d'un réseau hybride (satellitaire et terrestre).

Par ailleurs, on entend ici par « voie aller » la voie permettant notamment de diffuser des données du réseau vers les terminaux (elle est également appelée voie descendante (ou « downlink ») dans le cas d'un réseau terrestre), et par « voie retour » la voie permettant à des terminaux de transmettre des données au réseau (elle est également appelée voie montante (ou « uplink ») dans le cas d'un réseau terrestre).

En outre, on entend ici par « terminal de communication radio » tout équipement de communication fixe ou mobile (ou portable ou encore cellulaire) capable d'échanger des données par voie d'ondes avec un autre équipement, via un réseau d'accès radio. Par conséquent, il pourra par exemple s'agir d'un téléphone fixe ou mobile (ou cellulaire), d'un ordinateur fixe ou portable, ou d'un assistant personnel numérique (ou PDA), dès lors qu'il est équipé de moyens de communication radio, éventuellement satellitaires, aptes à la réception de données diffusées.

Dans les réseaux précités, les terminaux peuvent utiliser une voie retour pour transmettre des données. Mais, cela nécessite soit la mise en place de connexions dédiées de type point-à-point, soit l'acquittement de la réception des données par le réseau, et donc la mise en place d'une signalisation dédiée sur la voie aller. Cette signalisation dédiée consomme une partie de la capacité radio (ou bande passante) de la voie aller de diffusion, réduisant ainsi la capacité de diffusion du réseau. Or, réduire cette capacité de diffusion entraîne une réduction de l'intérêt économique que présente l'infrastructure de diffusion d'un réseau.

Il est certes possible que des terminaux transmettent certains types de message de données à un réseau de diffusion sans que cela ne nécessite un acquittement. C'est par exemple le cas dans les réseaux satellitaires de type SDMB pour ce qui concerne les messages destinés à transmettre des jetons de présence pour effectuer des mesures d'audience ou les messages d'urgence ou encore les messages de localisation. Mais, ces messages particuliers doivent être transmis par les terminaux à un réseau d'accès radio terrestre qui se charge ensuite de les transmettre au réseau SDMB. C'est ce que l'on appelle « une voie interactive terrestre ». L'inconvénient de cette technique réside dans le fait que les terminaux ne peuvent transmettre leurs messages de données qu'à condition qu'ils soient situés dans la zone de couverture du réseau d'accès radio terrestre, ce qui n'est pas toujours le cas, notamment en l'absence de couverture terrestre localement ou lorsque le réseau d'accès radio terrestre est indisponible par exemple du fait d'une surcharge.

Aucune solution connue n'apportant une entière satisfaction, l'invention a donc pour but d'améliorer la situation.

Elle propose à cet effet un dispositif de traitement destiné à être implanté dans un terminal de communication radio capable de se connecter à un réseau de communication radio disposant de voies aller et retour (telles que définies dans la partie introductive) pour les communications radio. Les voies aller et retour correspondent respectivement à des première et seconde bandes de fréquences distinctes ou bien à des tranches ou ensembles de tranches temporelles distinct(e)s (par exemple dans le cas du mode de transmission TDD (pour « Time Division Dupleix ») qui consiste à utiliser une unique porteuse découpée en tranches temporelles attribuées sélectivement aux voies aller et retour).

Ce dispositif de traitement se caractérise par le fait qu'il comprend des moyens de traitement chargés d'extraire de messages de contrôle, qui sont diffusés par le réseau sur la voie aller, des paramètres d'accès à la voie retour, et de générer des messages de données destinés à être transmis au réseau sur la voie retour en fonction des paramètres d'accès et ne nécessitant pas d'acquittement systématique sur la voie aller.

On entend ici par « ne nécessitant pas d'acquittement systématique » le fait de nécessiter un acquittement seulement et exclusivement lorsque cela est demandé expressément dans le message lui-même. Par conséquent en l'absence de demande d'acquittement le message ne fait jamais l'objet d'un acquittement.

Le dispositif selon l'invention peut comporter d'autres caractéristiques qui peuvent être prises séparément ou en combinaison, et notamment :
- ses moyens de traitement peuvent être chargés d'intégrer dans certains des messages des données auxiliaires représentatives d'une demande d'acquittement par le réseau sur sa voie aller ;
   ➢ ses moyens de traitement peuvent être chargés d'analyser les données à transmettre sous la forme d'un message, afin de déterminer leur niveau de priorité, et de décider d'intégrer ces données auxiliaires dans un message contenant les données analysées selon leur niveau de priorité ;
- ses moyens de traitement peuvent être chargés de décomposer des données, à transmettre, en au moins deux groupes de données et d'intégrer ces groupes dans des messages différents ;
- les messages de données à transmettre peuvent être par exemple des messages de type dit court (comme par exemple des messages SMS), adaptés de manière à ne pas nécessiter d'acquittement systématique sur la voie aller ;
- dans une première variante, les messages de données à transmettre peuvent être par exemple des messages de type dit « rapport de mesures », comprenant les données à transmettre, en remplacement ou en complément des mesures effectuées par le terminal ;
- dans une seconde variante, les messages de données à transmettre peuvent être par exemple des messages de type dit « rapport d'événement interne », comprenant les données à transmettre, en remplacement ou en complément des données représentatives d'un événement survenu dans le terminal ;
- ses moyens de traitement peuvent être chargés d'intégrer les données à transmettre dans le champ de contenu du message de rapport de mesures ou d'événement interne ;
- ses moyens de traitement peuvent être chargés d'ordonner la transmission des messages de données selon des fréquences ou des tranches temporelles fonction de leur type et/ou du besoin d'acquittement.

L'invention propose également un terminal de communication radio équipé d'un dispositif de traitement du type de celui présenté ci-avant.

L'invention propose également un réseau de communication radio comprenant des premiers moyens de communication chargés de diffuser par voie d'ondes des données sur une voie aller et des seconds moyens de communication chargés de recevoir sur une voie retour des données transmises par voie d'ondes par des terminaux de communication radio.

Ce réseau se caractérise par le fait que ses premiers moyens de communication sont chargés de générer et diffuser sur la voie aller (à destination des terminaux) des messages de contrôle comportant des paramètres qui définissent les accès à la voie retour, et que ses seconds moyens de communication sont chargés, en cas de réception sur la voie retour de messages générés par les terminaux au moyen d'un dispositif de traitement du type de celui présenté ci-avant, d'analyser chaque message afin de déterminer s'il requiert un acquittement sur la voie aller et d'ordonner aux premiers moyens de communication de générer un message d'acquittement à destination du terminal concerné lorsqu'un tel acquittement est requis.

Le réseau selon l'invention peut comporter d'autres caractéristiques qui peuvent être prises séparément ou en combinaison, et notamment :
- ses seconds moyens de communication peuvent être chargés, en cas de réception sur la voie retour de messages comportant des groupes de données résultant d'une décomposition de données initiales par le dispositif de traitement d'un terminal, de rassembler de façon ordonnée ces groupes afin de recomposer les données initiales ;
- ses seconds moyens de communication peuvent être chargés d'analyser le contenu de chaque message de manière à déterminer s'il requiert un acquittement ;
- en variante ses seconds moyens de communication peuvent être chargés de déterminer si un message requiert un acquittement en fonction de la tranche temporelle dans laquelle il a été transmis ou de la fréquence selon laquelle il a été transmis ;
- ses seconds moyens de communication peuvent être chargés d'ordonner la transmission d'un acquittement lorsque les capacités disponibles sur la voie aller le permettent ;
- ses seconds moyens de communication peuvent être chargés d'ordonner la transmission différée d'un acquittement lorsque les capacités disponibles sur la voie aller ne le permettent pas immédiatement ;
- les premiers moyens de communication et les seconds moyens de communication sont au moins en partie implantés, par exemple, dans des stations de base et/ou des répéteurs chargé(e)s d'analyser chaque message généré par un terminal au moyen de son dispositif de traitement.

D'autres caractéristiques et avantages de l'invention apparaîtront à l'examen de la description détaillée ci-après, et des dessins annexés, sur lesquels :
- la figure 1 illustre de façon très schématique et fonctionnelle une partie d'un réseau de diffusion satellitaire selon l'invention et des terminaux équipés d'un exemple de réalisation d'un dispositif de traitement selon l'invention, et
- la figure 2 illustre de façon très schématique et fonctionnelle une partie d'un réseau de diffusion terrestre selon l'invention et des terminaux mobiles équipés d'un exemple de réalisation d'un dispositif de traitement selon l'invention.

Les dessins annexés pourront non seulement servir à compléter l'invention, mais aussi contribuer à sa définition, le cas échéant.

L'invention a pour objet de permettre la transmission par des terminaux de communication radio de messages de données sur une voie retour d'un réseau de communication radio dont la voie aller est principalement dédiée à la diffusion de données, éventuellement de type multimédia.

Dans ce qui suit, on considère à titre d'exemple non limitatif que les terminaux de communication sont des téléphones mobiles (ou cellulaires). Mais, l'invention n'est pas limitée à ce type de terminal radio. Elle concerne en effet tout équipement de communication fixe ou mobile (ou portable ou encore cellulaire) capable d'échanger des données par voie d'ondes avec un autre équipement, via un réseau d'accès radio. Par conséquent, il pourra également s'agir de téléphones fixes ou mobiles (ou cellulaires), d'ordinateurs fixes ou portables, ou d'assistants personnels numériques (ou PDAs), équipés de moyens de communication radio, éventuellement satellitaires, aptes à la réception de données diffusées.

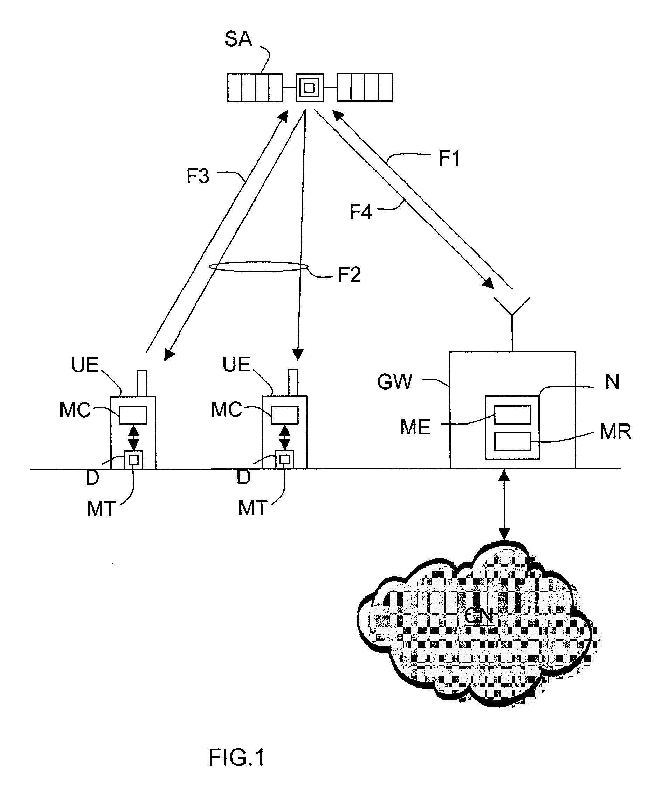

On se réfère tout d'abord à la figure 1 pour présenter l'invention dans le cadre d'une application à un réseau satellitaire de diffusion de données, par exemple de type multimédia. Par exemple, le réseau est de type SDMB.

Comme cela est illustré sur la figure 1, un réseau satellitaire de diffusion peut, d'une façon très schématique mais néanmoins suffisante à la compréhension de l'invention, être résumé à un réseau de coeur (ou « Core Network » en anglais) CN couplé à un réseau d'accès radio comprenant notamment une passerelle de communication radio (ou « gateway » en anglais) GW et au moins un satellite de communication SA.

La passerelle GW comprend classiquement un équipement définissant une station de base N comportant notamment un module d'émission ME et un module de réception MR.

Le module d'émission ME reçoit les données à transmettre aux terminaux UE et les intègre dans des trames de données destinées à être transmises au satellite SA, sous forme de signaux radio sur une voie aller dédiée principalement à la diffusion des données, par la passerelle GW (flèche F1), le satellite SA étant ensuite chargé de diffuser ces trames de données vers les terminaux UE (flèches F2). Selon l'invention, le module d'émission ME est également chargé de générer des messages de contrôle comprenant des paramètres destinés à indiquer aux terminaux UE comment ils peuvent accéder à la voie retour. Ces messages de contrôle sont destinés à être transmis au satellite SA, sous forme de signaux radio dans des canaux communs de contrôle sur la voie aller (de diffusion), par la passerelle GW (flèche F1), le satellite SA étant ensuite chargé de les diffuser vers les terminaux UE (flèches F2).

Le module de réception MR est chargé de recevoir les trames de données transmises par les terminaux UE sur une voie retour, via le satellite SA, et de les communiquer au coeur de réseau CN.

Les voies aller et retour correspondent respectivement à des première et seconde bandes de fréquences distinctes ou bien à des tranches ou ensembles de tranches temporelles distinct(e)s (par exemple dans le cas du mode de transmission TDD).

Egalement selon l'invention, certains au moins des terminaux UE sont équipés d'un dispositif de traitement D couplé à leur module de communication MC (comme illustré sur la figure 1 à titre d'exemple) ou bien intégré dans celui-ci.

Le dispositif de traitement D comprend un module de traitement MT tout d'abord chargé d'analyser les contenus des messages de contrôle qui sont générés par le module d'émission ME de la passerelle GW et diffusés par le satellite SA sur la voie aller, afin d'extraire les paramètres d'accès à la voie retour que certains d'entre eux comprennent.

Lorsque le module de traitement MT dispose de ces paramètres d'accès à la voie retour, il est alors en mesure, chaque fois que son terminal UE le requiert, de générer des messages de données destinés à être transmis au réseau sur la voie retour par le module de communication MC dudit terminal UE et via le satellite SA.

L'originalité de ces messages de données réside dans le fait qu'ils ne nécessitent pas d'acquittement systématique du réseau sur la voie aller. Plus précisément, ce type de message de données ne fait l'objet d'aucun acquittement de la part du réseau, tant qu'il ne le requiert pas expressément au moyen de données auxiliaires (représentatives d'une demande d'acquittement par le réseau sur sa voie aller). Par conséquent, lorsqu'un message de données ne comporte pas de données auxiliaires représentatives d'une demande d'acquittement il ne fait pas l'objet d'un acquittement.

Le module de traitement MT peut donc être éventuellement chargé d'intégrer de telles données auxiliaires dans certains des messages à transmettre.

Cette intégration peut se faire à la requête du terminal UE ou bien consécutivement à l'analyse des données que le terminal UE souhaite transmettre sur la voie retour. Dans le second cas, le module de traitement MT analyse les données qui doivent être transmises sous la forme d'un message, afin de déterminer, par exemple, leur niveau de priorité. Ensuite, le module de traitement MT détermine si ce niveau de priorité justifie ou non une demande d'acquittement. Par exemple, on peut avoir des niveaux de priorité haut et bas pour lesquels on doit respectivement demander et ne pas demander un acquittement. Le niveau haut peut par exemple être réservé aux données qui signalent n'importe quel type d'urgence (le message constitue alors un message d'urgence).

Dans une première variante, le module de traitement MT peut analyser les données qui doivent être transmises sous la forme d'un message, afin de déterminer si elles sont associées à un marqueur définissant leur type.

Dans une deuxième variante, le module de traitement MT peut déterminer via son terminal UE si les capacités disponibles sur la voie aller peuvent permettre la transmission d'un acquittement sur cette même voie.

Si la demande d'acquittement n'est pas justifiée, le module de traitement MT transmet le message de données au module de communication MC de son terminal UE, sans lui adjoindre des données auxiliaires. En revanche, si la demande d'acquittement est justifiée, le module de traitement MT transmet le message de données au module de communication MC de son terminal UE, après lui avoir adjoint des données auxiliaires représentatives d'une demande d'acquittement.

La transmission des messages de données vers le satellite SA peut par exemple se faire par accès aléatoire sur la voie retour. Dans une variante correspondant à un mode de transmission de type TDD, on peut utiliser certaines tranches temporelles réservées à la voie retour pour transmettre les messages de données. On peut même envisager d'attribuer des tranches temporelles spécifiques de la voie retour à des types différents de message de données ou en fonction du besoin ou de l'absence de besoin d'acquittement. On peut également envisager d'attribuer des fréquences spécifiques de la bande passante de la voie retour à des types différents de message de données ou en fonction du besoin ou de l'absence de besoin d'acquittement.

Les messages de données peuvent se présenter sous diverses formes. Ainsi, il peut par exemple s'agir de messages textuels de type dit court (comme par exemple des messages SMS (ou « Short Message Service »), éventuellement adaptés de manière à ne pas nécessiter d'acquittement systématique sur la voie aller. L'adaptation peut par exemple se faire au niveau de l'entête du message court. On peut également envisager de ne pas adapter le message court. Dans ce cas, l'équipement N qui est chargé de réceptionner le message de données sait, lorsqu'il est transmis sur la voie retour, qu'il n'y a pas lieu de l'acquitter, sauf si cela est demandé. Le terminal UE sait qu'il n'attend pas d'acquittement.

Il peut également s'agir de messages du type de ceux qui sont utilisés pour transmettre des mesures au réseau, comme par exemple les rapports de mesures (ou « MEASUREMENT REPORTS ») notamment utilisés dans les réseaux de type UMTS. De tels rapports sont par exemple utilisés pour communiquer des mesures de position, déterminées par une application interne du terminal UE à partir d'informations de localisation (par exemple issues d'une constellation de satellites GPS ou GALILEO), ou bien des mesures de volume de trafic ou de qualité de service (QoS) déterminées par une application interne du terminal UE.

II peut également s'agir de messages du type de ceux qui sont utilisés pour signaler au réseau des événements internes au terminal UE.

Il peut également s'agir de messages du type de ceux qui sont utilisés pour transmettre au réseau des jetons de présence pour effectuer des mesures d'audience.

De tels messages contiennent généralement au moins un champ de cause permettant de définir la cause de l'envoi et un champ de contenu destiné aux informations à transmettre.

Par exemple, le module de traitement MT peut placer les données à transmettre, ainsi que les éventuelles données auxiliaires, dans le champ de contenu d'un message de l'un des types précités. Il est également possible d'intégrer le message de données à transmettre (avec les éventuelles données auxiliaires) dans le champ de contenu d'un message du type précité, ce qui constitue une espèce d'encapsulation.

On notera que les données à transmettre remplacent ou bien complètent, dans le champ de contenu, les mesures qui sont effectuées par le terminal UE ou bien les données qui sont représentatives d'un événement interne au terminal UE ou d'un jeton de présence.

La taille des messages de données, en termes de nombre de bits, est variable. Elle peut être éventuellement restreinte à une valeur maximale. Dans ce cas, lorsque les données à transmettre dépassent la valeur seuil (en nombre de bits), le module de traitement MT peut être agencé de manière à les décomposer en au moins deux groupes de données, afin d'intégrer ces groupes dans des messages différents qui seront transmis successivement par le module de communication MC du terminal UE sur la voie retour.

Ainsi, on peut envisager d'intégrer le contenu d'un courriel (ou « e-mail ») dans un ou plusieurs messages de données.

Les données à transmettre peuvent également représenter un code de quelques bits qui correspond pour le réseau à un message spécifique.

Bien entendu, il est possible de créer un nouveau type de message dédié spécifiquement à la transmission des données sur la voie retour.

On notera que le dispositif D n'est pas forcément obligé de générer ses messages lorsque son terminal UE est placé dans un mode l'autorisant à recevoir les services de diffusion.

Chaque message de données généré par un dispositif de traitement D est transmis en direction du satellite SA par le module de communication MC du terminal UE sur la voie retour (flèche F3). Le satellite SA retransmet ensuite chaque message de données qu'il reçoit sur la voie retour en direction de la passerelle GW, en utilisant cette même voie retour (flèche F4).

Lorsque le module de réception MR, de la station de base N implantée dans la passerelle GW, reçoit un message de données en provenance d'un terminal UE, il commence par analyser son contenu afin de déterminer s'il comporte des données auxiliaires représentatives d'un acquittement sur la voie aller. Si ce n'est pas le cas le message est traité localement ou transmis au coeur de réseau CN en l'absence de répéteur (selon son contenu).

En revanche si un acquittement est requis, le module de réception MR ordonne au module d'émission ME associé de générer un message d'acquittement à destination du terminal UE concerné. Ce message d'acquittement est alors transmis au satellite SA sur la voie aller (flèche F1), puis diffusé par le satellite SA vers le terminal UE concerné. Dans le même temps, le message de données reçu est traité localement ou transmis au coeur de réseau CN (selon son contenu).

Lorsque l'on utilise des tranches temporelles spécifiques de la voie retour ou des fréquences spécifiques de la bande passante de la voie retour pour transmettre des messages de données de types différents ou en fonction du besoin ou de l'absence de besoin d'acquittement, le module de réception MR peut déduire de la tranche temporelle ou de la fréquence (utilisée pour transmettre le message de données) si un acquittement doit être transmis.

On peut également envisager un mode de fonctionnement dans lequel le module de réception MR ne demande la transmission d'un acquittement qu'à condition que les capacités disponibles sur la voie aller le permettent. Par exemple, lorsque les capacités ne le permettent pas la transmission de l'acquittement peut être éventuellement différée.

Lorsqu'un terminal UE est contraint de transmettre plusieurs (au moins deux) messages de données pour transmettre sous forme de groupes un ensemble de données (initial) dont la taille est supérieure à la valeur maximale, alors le module de réception MR de la station de base N commence par rassembler de façon ordonnée les groupes de données afin de recomposer l'ensemble de données initial. Puis, il procède comme si c'était un unique message en analysant son contenu de manière à déterminer s'il doit faire l'objet d'un acquittement, avant de transmettre l'ensemble de données recomposé au coeur de réseau CN ou de le traiter localement.

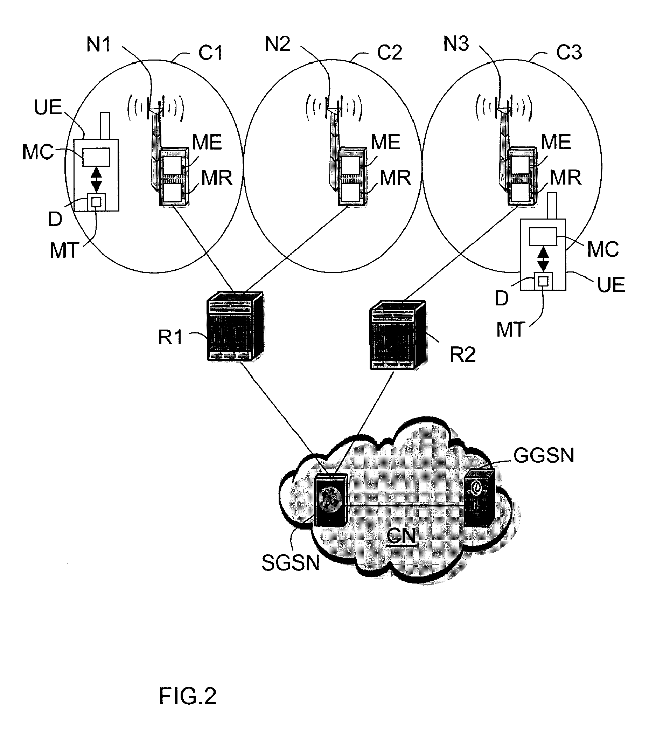

On se réfère maintenant à la figure 2 pour présenter l'invention dans le cadre d'une application à un réseau terrestre de diffusion de données, par exemple de type multimédia. Par exemple, le réseau est un réseau cellulaire (ou mobile) de type UMTS/DVB-H, adapté à la diffusion de programmes de télévision mobile (ou « mobile TV »). Mais, il pourrait également s'agir d'un réseau de type UMTS/MBMS, par exemple.

Comme cela est illustré sur la figure 2, un réseau UMTS adapté à la diffusion peut, d'une façon très schématique mais néanmoins suffisante à la compréhension de l'invention, être résumé à un réseau de coeur CN couplé à un réseau d'accès radio (UTRAN).

Le réseau d'accès radio comporte principalement des stations de base (appelées Node Bs) Ni et des contrôleurs de réseau radio ou noeuds (appelés RNCs) Rj, raccordés entre eux.

Chaque station de base Ni est associée à au moins une cellule (logique) Ci couvrant une zone radio (ou zone de couverture) dans laquelle des terminaux de communication radio mobile (ou cellulaire) MS peuvent établir (ou poursuivre) des liaisons radio et dans laquelle cette station de base Ni peut diffuser des données, par exemple de type multimédia (telles que des programmes de télévision, notamment).

Dans l'exemple illustré, seules trois cellules (C1-C3, i = 1 à 3) ont été représentées. Mais, l'indice i peut prendre n'importe quelle valeur non nulle. Par ailleurs, dans l'exemple illustré, chaque station de base Ni est associée à une cellule Ci. Mais, une station de base peut être associée à plusieurs cellules.

Chaque contrôleur de réseau radio Rj est couplé à au moins une station de base Ni. Dans l'exemple illustré, seuls deux contrôleurs de réseau radio (N1 et N2, j = 1 et 2) ont été représentés. Le contrôleur R1 est couplé aux stations de base N1 et N2, tandis que le contrôleur R2 est couplé à la station de base N3. Mais, l'indice j peut prendre n'importe quelle valeur non nulle.

Le réseau de coeur CN comprend des équipements de réseau qui pour certains sont raccordés notamment aux contrôleurs de réseau radio Rj. Parmi ces équipements on peut notamment citer au moins un noeud SGSN (pour « Serving GPRS Support Node »), raccordé notamment à des contrôleurs de réseau radio Rj, et au moins un noeud GGSN (pour « Gateway GPRS Support Node ») connecté au noeud SGSN et assurant la connexion du réseau de coeur CN à un réseau de services (par exemple de type IP) matérialisant les services mis à la disposition des utilisateurs des terminaux mobiles MS par l'opérateur du réseau UMTS, et notamment les services de diffusion de données.

Comme dans l'exemple précédent, les voies aller et retour du réseau terrestre correspondent respectivement à des première et seconde bandes de fréquences distinctes ou bien à des tranches ou ensembles de tranches temporelles distinct(e)s (par exemple dans le cas du mode de transmission TDD).

Ce second exemple de mise en oeuvre est sensiblement identique au premier. Il n'en diffère que par le réseau d'accès radio utilisé. Les terminaux UE comportent le même type de dispositif de traitement D que celui décrit ci-avant en référence à la figure 1. Et chaque station de base (Node B) Ni dispose d'un module d'émission ME et d'un module de réception MR des types de ceux décrits ci-avant en référence à la figure 1 (bien entendu ils sont ici adaptés aux communications terrestres et non satellitaires).

Par conséquent, le module d'émission ME d'une station de base Ni reçoit du contrôleur Rj associé (qui les reçoit lui-même du coeur de réseau CN) les données à diffuser aux terminaux UE et les intègre dans des trames de données qu'il diffuse dans sa zone de couverture sous forme de signaux radio sur la voie aller. Parmi ces données diffusées certaines constituent des messages de contrôle comprenant les paramètres d'accès à la voie retour.

De son côté, le module de réception MR est chargé de recevoir notamment les messages de données qui sont transmis sur la voie retour par les terminaux UE qui sont situés dans la zone de couverture de sa station de base Ni, puis d'analyser leurs contenus (après les avoir éventuellement recomposés) afin de déterminer s'ils doivent faire l'objet d'un acquittement, et enfin de traiter localement ces contenus ou de les communiquer au coeur de réseau CN via le contrôleur Rj associé.

Chaque dispositif de traitement D selon l'invention, et notamment le module de traitement MT qu'il comprend, peut être réalisé sous la forme de circuits électroniques, de modules logiciels (ou informatiques), ou d'une combinaison de circuits et de logiciels.

Dans les deux exemples précédemment décrits le réseau d'accès radio du réseau de diffusion est soit purement satellitaire, soit purement terrestre. Mais, l'invention s'applique également aux réseaux hybrides comportant un réseau d'accès radio satellitaire et un réseau d'accès radio terrestre, l'un au moins d'entre eux étant adapté à la diffusion de données. On peut ainsi envisager que la voie aller de diffusion soit purement satellitaire (par exemple de type DVB-H adapté au satellite), alors que la voie retour est purement terrestre (par exemple de type UMTS).

Par ailleurs, les équipements de réseau qui sont chargés d'analyser les contenus des messages de données ne sont pas obligatoirement des stations de base (ou leur équivalent fonctionnel). Il peut en effet également s'agir de répéteurs terrestres (de préférence à fonctionnement bidirectionnel) d'un réseau hybride.

L'invention ne se limite pas aux modes de réalisation de dispositif de traitement, de terminal de communication radio et de réseau de communication radio décrits ci-avant, seulement à titre d'exemple, mais elle englobe toutes les variantes que pourra envisager l'homme de l'art dans le cadre des revendications ci-après.

## Revendications

1. Dispositif de traitement (D) pour un terminal de communication radio (UE) propre à être connecté à un réseau de communication radio disposant d'une voie dite aller permettant de diffuser des données dudit réseau vers des terminaux (UE), et d'une voie dite retour dédiée à la transmission de données des terminaux (UE) vers ledit réseau, **caractérisé en ce qu'**il comprend des moyens de traitement (MT) agencés pour extraire de messages de contrôle, diffusés par ledit réseau sur la voie aller, des paramètres d'accès à ladite voie retour, et pour générer des messages de données destinés à être transmis audit réseau sur ladite voie retour en fonction desdits paramètres d'accès et ne nécessitant pas d'acquittement systématique sur ladite voie aller.

2. Dispositif selon la revendication 1, **caractérisé en ce que** lesdits moyens de traitement (MT) sont agencés pour intégrer dans certains desdits messages des données auxiliaires représentatives d'une demande d'acquittement par ledit réseau sur sa voie aller.

3. Dispositif selon la revendication 2, **caractérisé en ce que** lesdits moyens de traitement (MT) sont agencés pour analyser les données à transmettre sous la forme d'un message de manière à déterminer leur niveau de priorité, et pour décider d'intégrer lesdites données auxiliaires dans un message contenant les données analysées en fonction de leur niveau de priorité.

4. Dispositif selon l'une des revendications 1 à 3, **caractérisé en ce que** lesdits moyens de traitement (MT) sont agencés pour décomposer des données à transmettre en au moins deux groupes de données et pour intégrer lesdits groupes dans des messages différents.

5. Dispositif selon l'une des revendications 1 à 4, **caractérisé en ce que** lesdits messages de données à transmettre sont des messages de type dit court adaptés de manière à ne pas nécessiter d'acquittement systématique sur ladite voie aller.

6. Dispositif selon l'une des revendications 1 à 4, **caractérisé en ce que** lesdits messages de données à transmettre sont des messages de type dit rapport de mesures, comprenant lesdites données à transmettre.

7. Dispositif selon l'une des revendications 1 à 4, **caractérisé en ce que** lesdits messages de données à transmettre sont des messages de type dit rapport d'événement interne, comprenant lesdites données à transmettre.

8. Dispositif selon l'une des revendications 6 et 7, **caractérisé en ce que** lesdites données à transmettre remplacent les mesures effectuées par ledit terminal (UE) ou des données représentatives d'un événement survenu dans ledit terminal (UE).

9. Dispositif selon l'une des revendications 6 et 7, **caractérisé en ce que** lesdites données à transmettre complètent les mesures effectuées par ledit terminal (UE) ou des données représentatives d'un événement survenu dans ledit terminal (UE).

10. Dispositif selon l'une des revendications 6 à 9, **caractérisé en ce que** lesdits moyens de traitement (MT) sont agencés pour intégrer lesdites données à transmettre dans un champ de contenu d'un message de rapport de mesures ou d'événement interne.

11. Dispositif selon l'une des revendications 1 à 10, **caractérisé en ce que** lesdits moyens de traitement (MT) sont agencés pour ordonner la transmission desdits messages de données selon des fréquences fonction de leur type et/ou du besoin d'acquittement.

12. Dispositif selon l'une des revendications 1 à 10, **caractérisé en ce que** lesdits moyens de traitement (MT) sont agencés pour ordonner la transmission desdits messages de données dans des tranches temporelles fonction de leur type et/ou du besoin d'acquittement.

13. Terminal de communication radio (UE) propre à être connecté à un réseau de communication radio disposant d'une voie dite aller permettant de diffuser des données dudit réseau vers des terminaux (UE), et d'une voie dite retour dédiée à la transmission de données des terminaux (UE) vers ledit réseau, **caractérisé en ce qu'**il comprend un dispositif de traitement (D) selon l'une des revendications précédentes.

14. Réseau de communication radio comprenant des premiers moyens de communication (ME, SA) propres à diffuser par voie d'ondes des données sur une voie dite aller et des seconds moyens de communication (MR, SA) propres à recevoir des données transmises par voie d'ondes sur une voie retour par des terminaux de communication radio (UE), **caractérisé en ce que** lesdits premiers moyens de communication (ME, SA) sont agencés pour générer et diffuser sur ladite voie aller, à destination desdits terminaux (UE), des messages de contrôle comportant des paramètres définissant les accès à ladite voie retour, et **en ce que** lesdits seconds moyens de communication (MR, SA) sont agencés, en cas de réception sur ladite voie retour de messages générés par lesdits terminaux (UE) au moyen d'un dispositif de traitement (D) selon l'une des revendications 1 à 12, pour analyser chaque message de manière à déterminer s'il requiert un acquittement sur ladite voie aller et à ordonner auxdits premiers moyens de communication (ME, SA) de générer un message d'acquittement à destination du terminal (UE) concerné lorsqu'un tel acquittement est requis.

15. Réseau selon la revendication 14, **caractérisé en ce que** lesdits seconds moyens de communication (MR, SA) sont agencés, en cas de réception sur ladite voie retour de messages comportant des groupes de données résultant d'une décomposition de données initiales par un dispositif de traitement (D) d'un terminal (UE), pour rassembler de façon ordonnée lesdits groupes de manière à recomposer lesdites données initiales.

16. Réseau selon l'une des revendications 14 et 15, **caractérisé en ce que** lesdits seconds moyens de communication (MR, SA) sont agencés pour analyser le contenu de chaque message de manière à déterminer s'il requiert un acquittement.

17. Réseau selon l'une des revendications 14 et 15, **caractérisé en ce que** lesdits seconds moyens de communication (MR, SA) sont agencés pour déterminer si un message requiert un acquittement en fonction de la tranche temporelle dans laquelle il a été transmis.

18. Réseau selon l'une des revendications 14 et 15, **caractérisé en ce que** lesdits seconds moyens de communication (MR, SA) sont agencés pour déterminer si un message requiert un acquittement en fonction de la fréquence selon laquelle il a été transmis.

19. Réseau selon l'une des revendications 14 à 18, **caractérisé en ce que** lesdits seconds moyens de communication (MR, SA) sont agencés pour ordonner la transmission d'un acquittement lorsque les capacités disponibles sur la voie aller le permettent.

20. Réseau selon l'une des revendications 14 à 19, **caractérisé en ce que** lesdits seconds moyens de communication (MR, SA) sont agencés pour ordonner la transmission différée d'un acquittement lorsque les capacités disponibles sur la voie aller ne le permettent pas.

21. Réseau selon l'une des revendications 14 à 20, **caractérisé en ce que** lesdits premiers moyens de communication (ME, SA) et lesdits seconds moyens de communication (MR, SA) sont au moins en partie implantés dans des stations de base (Ni ; N) agencées pour analyser le contenu de chaque message généré par un terminal (UE) au moyen d'un dispositif de traitement (D) selon l'une des revendications 1 à 12.

22. Réseau selon l'une des revendications 14 à 20, **caractérisé en ce que** lesdits premiers moyens de communication (ME, SA) et lesdits seconds moyens de communication (MR, SA) sont au moins en partie implantés dans des répéteurs terrestres agencés pour analyser le contenu de chaque message généré par un terminal (UE) au moyen d'un dispositif de traitement (D) selon l'une des revendications 1 à 12.
